# EUROPEAN PATENT APPLICATION

(11) **EP 4 390 169 A1**
(43) Date of publication of application: **26.06.2024**
(21) Application number: 22861050.7
(22) Date of filing: 28.07.2022
(51) Int. Cl.: F16D 3/16, B21B 35/14, F16D 3/18

(54) **DRIVING FORCE TRANSMISSION MECHANISM AND METHOD FOR OPERATING DRIVING FORCE TRANSMISSION MECHANISM**

(30) Priority: 25.08.2021 JP 2021137236
(71) Applicant: JFE Steel Corporation, Tokyo 100-0011 (JP)
(72) Inventor: OOTA Yusuke, Tokyo 100-0011 (JP); SAKOTA Ichiro, Tokyo 100-0011 (JP); ANDO Kazuma, Tokyo 100-0011 (JP)
(74) Representative: Hoffmann Eitle
(86) International application number: PCT/JP2022/029103
(87) International publication number: WO 2023/026759

(57) **Abstract**

Proposed is a driving force transmission mechanism capable of preventing breakage of an oil chamber when the internal pressure in the oil chamber rises by impact when replacing work rolls and the like. The driving force transmission mechanism transmits power of a driving source to a work roll through a spindle and includes a first gear potion disposed on one end portion of the spindle, a second gear part disposed on the driving source or the work roll and fitted to the first gear part and an oil chamber for supplying a lubricating oil to the first gear part and the second gear part, where the oil chamber is provided with a first valve for discharging inner air in the oil chamber to an outside of the oil chamber and a second valve for introducing outer air into the oil chamber.

## Description

### Technical Field

This invention relates to a driving force transmission mechanism that is used, for example, in a roll driving part of a rolling mill and transmitting a force of a driving source to a work roll through a spindle, and a method for operating the same.

### Background

In a roll-cross type rolling mill, where upper and lower work rolls are rotated by upper and lower drive shafts to roll a material to be rolled, the difference between the drive-side bending angle and the roll-side bending angle causes a difference in the rotation speed of each phase of the work rolls.
Against this problem, a constant velocity driving force transmission mechanism (hereinafter referred to as "gear spindle") is used to prevent the difference in the rotation speed from occurring at each phase. For example, Patent Literature 1 discloses a gear spindle as a rolling machine for rolling a material to be rolled by rotating the upper and lower work rolls or center roll by the upper and lower driving shafts.

The gear spindle disclosed in Patent Literature 1 includes a communication hole communicating a closed space enclosed by a boot-type seal and by an outer circumferential face of an inner cylindrical portion with the outside, to prevent an increase in the internal pressure in the boot-type seal.
The pressure that has risen inside the closed space formed in the gear spindle is reduced by venting the gas in the closed space through the communication hole. Thus, the gear spindle can prevent the internal pressure in the boot-type seal from increasing excessively.

The communication hole is positioned on an outer circumferential surface of an inner gear part to prevent the internal pressure in the closed space from rising. The increase in internal pressure occurs due to the vaporization of lubricating oil caused by heat generated due to friction or the like during the rotation of the gear spindle. The lubricating oil stored in the oil chamber of the gear spindle is positioned toward the outer circumferential face due to the centrifugal force generated during the rotation of the gear spindle. This prevents the lubricating oil stored in the oil chamber from leaking out of the connecting hole during rotation of the gear spindle.

### Citation List

### Patent Literature

Patent Literature 1: JP-2017-26042A

### Summary of Invention

### Technical Problem

However, the prior art described above has the following problems. The internal pressure in the boot-type seal is caused not only due to the lubricating oil vaporized by the heat generated while the gear spindle is rotating, but also due to the impact in the axial direction generated when the gear spindle is stopped rotating to replace the work roll or an intermediate roll (hereinafter referred to as "work roll and the like") connected to the gear spindle.

The gear spindle has the communication hole on the outer circumferential face of the inner cylindrical part. When the gear spindle stops rotating, the position of the lubricating oil stored in the boot-type seal may overlap with the position of the communication hole. In this situation, the increase in internal pressure in the oil chamber due to the impact when replacing the work roll and the like may cause the lubricating oil to pass through the communication hole and leak out of the boot-type seal. This may cause the amount of lubricating oil to fall below a certain level, leading to major trouble such as gear wear.

The present invention has been developed in view of these circumstances of the prior art and aims to propose a driving force transmission mechanism that can prevent the breakage of the oil chamber by controlling the internal pressure in the oil chamber within a certain range in such a case when the internal pressure in the oil chamber increases by the impact during the replacement of the work roll and the like to break the oil chamber, and a method for operating the driving force transmission mechanism.

### Solution to Problem

As a result of intensive studies into solving the problems of the prior art, the inventors have come to the following insight. That is, providing a first valve for discharging inner air within an oil chamber to the outside and a second valve for introducing outer air into the oil chamber with the oil chamber of the driving force transmission mechanism can prevent the breakage of the oil chamber and leakage of the lubricating oil in the oil chamber even when the internal pressure is applied to the oil chamber by the impact during the replacement of the work roll and the like. Also, the deformation of the oil chamber can be prevented even when the internal pressure in the oil chamber is reduced when the work roll and the like are taken out. The present invention has been developed based on this insight.

The invention is made based on the above insight and summarized as follows. That is, the invention proposes the following items (1) and (2).
(1) a driving force transmission mechanism for transmitting the power of a driving source to a work roll through a spindle, characterized by including
   a first gear part provided on one end of the spindle;
   a second gear part provided on the driving source or the work roll to fit into the first gear part; and
   an oil chamber for supplying lubricating oil to the first gear part and the second gear part,
   wherein the oil chamber is provided with a first valve for discharging inner air in the oil chamber out of the oil chamber and a second valve for introducing outer air into the oil chamber.

The driving force transmission mechanism according to the invention may have more preferable solutions as follows:
(a) the first valve is provided at a position more circumferentially outward than the first gear part and the second gear part in the radial direction of the oil chamber; and
(b) a proximity sensor for detecting the position of the first valve and a control unit for stopping the driving of the driving source such that the first valve is positioned upward with respect to a rotational axis of the spindle are provided.

(2) A method for operating a driving force transmission mechanism according to the invention is a method for operating the driving force transmission mechanism, which comprises a step of detecting the position of the first valve and a step of stopping the driving of the driving source such that the first valve is positioned upward with respect to the rotational axis of the spindle. Advantageous Effect of Invention

The driving force transmission mechanism according to the invention comprises the first valve for discharging the inner air in the oil chamber out of the oil chamber and the second valve for introducing outer air into the oil chamber. Thus, the invention can prevent the leakage of the lubricating oil in the oil chamber even when internal pressure is applied to the oil chamber due to the impact when replacing the work roll and the like, and the deformation of the oil chamber even when the internal pressure in the oil chamber decreases when the work roll and the like are removed.

### Brief Description of Drawings

FIG. 1 is a sectional view showing the whole configuration of a driving force transmission mechanism according to an embodiment of the invention.
FIG. 2 is a sectional view showing a main part of the driving force transmission mechanism according to an embodiment of the invention.
FIG. 3 is a schematic view showing an arrangement of a first valve and a second valve provided in the driving force transmission mechanism according to an embodiment of the invention, with FIG. 3(a) being a front view, FIG. 3(b) being a side section view, and FIG. 3(c) being a rear view. Description of Embodiment

### [First embodiment]

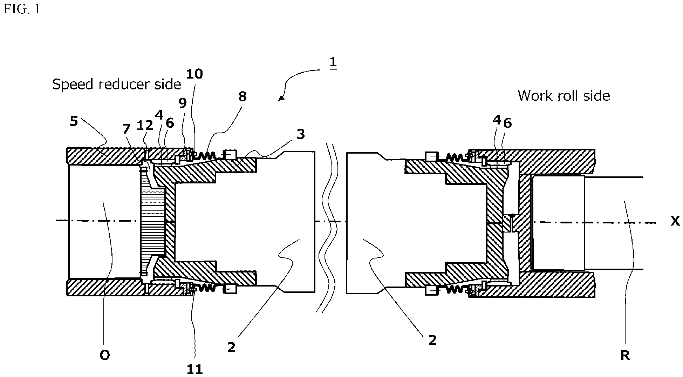

A driving force transmission mechanism according to this embodiment will be described with reference to drawings. FIG. 1 is a sectional view showing the whole configuration of a driving force transmission mechanism 1 according to this embodiment. As shown in FIG. 1, the driving force transmission mechanism 1 according to this embodiment has the basic configuration of an ordinary driving force transmission mechanism including a second gear part 6 provided on an inner circumferential face of an outer cylindrical part 5 and a first gear part 4 provided on an outer circumferential face of an inner cylindrical part 3, where the second gear part 6 and the first gear part 4 are engaged and shaft centers of the outer cylindrical part 5 and the inner cylindrical part 3 are rotated. A driving source powers the driving force transmission mechanism 1 and rotates a spindle 2 around a rotational axis X through an output axis O of a reducer. The rotation of the spindle 2 is then transmitted to the inner cylindrical part 3. The rotation of the inner cylindrical part 3 is transmitted from the first gear part 4 to the second gear part 6, and then to a work roll R. The power of the driving source is transmitted to the work roll R through the spindle 2 in this manner.

The driving force transmission mechanism 1 according to this embodiment also has an oil chamber 7 that supplies lubricating oil to the first gear part 4 and the second gear part 6, and a boot-type seal 8 provided between an end portion of the outer cylindrical part 5 and the outer circumferential face of the inner cylindrical part 3 that prevents the leakage of the lubricating oil in the oil chamber 7 to the outside. The boot-type seal 8 forms the oil chamber 7 and the interior of the oil chamber. The outer cylindrical part 5 has an oil supply hole 12 that communicates to the oil chamber 7. The lubricating oil is supplied from the oil supply hole 12 and stored in the oil chamber 7.

The boot-type seal 8 is provided in the driving force transmission mechanism 1 according to this embodiment. It may be also provided at a lower end of a ventilation ring 9 disposed in the end portion of the outer cylindrical part 5. The driving force transmission mechanism 1 has a first valve 10 for discharging inner air in the oil chamber to the outside when the pressure in the oil chamber enclosed with the boot-type seal 8 and the outer circumferential face of the inner cylindrical part 3 rises, and a second valve 11 for rising the pressure in the oil chamber by introducing outer air when the pressure in the oil chamber is reduced. That is, the technical feature of the driving force transmission mechanism 1 according to this embodiment lies in that the first valve 10 and the second valve 11 are provided to adjust the pressure in the oil chamber within a given range. These configuration members provided in the driving force transmission mechanism 1 according to this embodiment will be described below.

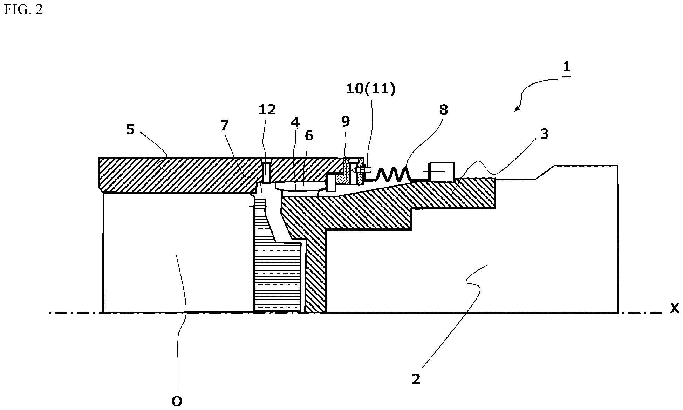

FIG. 2 is a sectional view showing the configuration of a main part of the driving force transmission mechanism 1 according to this embodiment. As shown in FIG. 2, the driving force transmission mechanism 1 according to this embodiment includes the boot-type seal 8 that is provided between the end portion of the outer cylindrical part 5 and the outer circumferential face of the inner cylindrical part 3 around the entire circumference. The oil chamber 7 and its interior are formed by the end portion of the outer cylindrical part 5, the outer circumferential face of the inner cylindrical part 3, and the boot-type seal 8. The boot-type seal 8 has a function that can accommodating changes in the inclination angles of the outer cylindrical part 5 and the inner cylindrical part 3. The boot-type seal 8 may only have a configuration that can correspond to the changes in the inclination angles of the outer cylindrical part 5 and the inner cylindrical part 3, and may have, for example, a bellows-like structure or a paper folding structure comprised of mountain folds and valley folds. The boot-type seal 8 should be made of a material with excellent pressure resistance, which can withstand pressurized or depressurized states without breaking. Both ends of the boot-type seal 8 are fixed to the lower end of the ventilation ring 9 provided at the end portion of the outer cylindrical part 5, and the outer circumference of the inner cylindrical part 3, using boot bands or similar fasteners.

### (First valve)

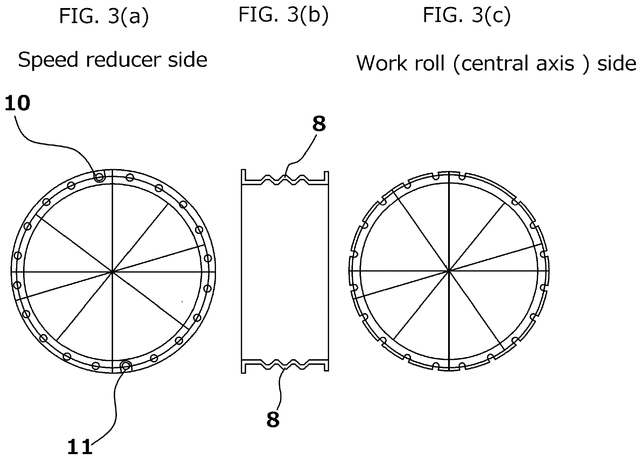

FIG. 3 is a schematic view showing an arrangement of the first valve provided in the driving force transmission mechanism according to this embodiment of the invention. The first valve 10 is a member that controls the internal pressure in the oil chamber and is located at a position more circumferentially outward than the first gear part 4 and the second gear part 6 in the radial direction of the oil chamber 7. The first valve 10 should only be provided at a position more circumferentially outward than the first gear part 4 and the second gear part 6 in the radial direction of the oil chamber 7, and may be provided, for example, in the ventilation ring 9 provided in the end portion of the outer cylindrical part 5. The first valve 10 is a check valve and may be properly designed to meet the use conditions of the driving force transmission mechanism 1 and the internal pressure in the oil chamber formed in the driving force transmission mechanism 1. For example, the first valve 10 may be designed to have a specification to use a pressure of vacuum to 20 MPa at a gauge pressure and a cracking pressure of 10 to 50 kPa.

After prolonged use of the driving force transmission mechanism 1, it is necessary to replace the currently-used work roll R with a new work roll R'. The currently-used work roll R is replaced by stopping the driving of the driving source to suspend the rotation of the driving force transmission mechanism 1, removing the currently-used work roll R, and inserting the new work roll R' into the driving force transmission mechanism 1. The work roll R' is inserted by pushing the work roll R' into the driving force transmission mechanism 1. The impact generated by pushing the work roll R' into the driving force transmission mechanism 1 compresses the oil chamber and increases the internal pressure in the oil chamber. In this situation, it is necessary to discharge the inner air in the oil chamber to the outside when the internal pressure in the oil chamber reaches a given value or more. Thus, the first valve 10 is provided in the driving force transmission mechanism 1 according to this embodiment, as a check valve for discharging the inner air in the oil chamber to the outside of the oil chamber. The first valve 10 is a member that reduces the internal pressure in the oil chamber to a given range by discharging the inner air in the oil chamber to the outside.

The first valve 10 can discharge the inner air in the oil chamber to the outside during operation of the driving force transmission mechanism 1, even when the internal pressure in the oil chamber rises to a certain value or higher due to the vaporized lubricating oil being discharged into the oil chamber.

### (Second valve)

FIG. 3 is a schematic view showing an arrangement of a second valve 11 provided in the driving force transmission mechanism 1 according to the embodiment of the invention. The second valve 11 is a member that controls the internal pressure in the oil chamber within a given range. The second valve 11 should only be provided at a position more circumferentially outward than the first gear part 4 and the second gear part 6 in the radial direction of the oil chamber 7, and may be disposed, for example, at the ventilation ring 9 provided in the end portion of the outer cylindrical part 5 or at a position to face to the first valve 10. The second valve 11 is a check valve and may be properly designed to meet the use conditions of the driving force transmission mechanism 1 and the internal pressure in the oil chamber formed in the driving force transmission mechanism 1. For example, the second valve 11 may be designed to have a specification to use a pressure of vacuum to 20 MPa at a gauge pressure and a cracking pressure of 0.1 to 1.0 kPa.

After prolonged use of the driving force transmission mechanism 1, it is necessary to replace the currently-used work roll R with a new work roll R'. The currently-used work roll R is replaced by stopping the driving of the driving source to suspend the rotation of the driving force transmission mechanism 1 and by removing the currently-used work roll R. At this time, the work roll R is instantaneously pulled in the direction of the rotational axis X, sometimes causing the internal pressure in the oil chamber to be reduced. The second valve 11 is provided as a check valve to introduce outer air into the oil chamber when the internal pressure in the oil chamber reaches a certain level or lower. The second valve 11 is a member which increases the internal pressure in the oil chamber by introducing outer air into the oil chamber and controls the internal pressure in the oil chamber within a given range.

The second valve 11 can increase the internal pressure in the oil chamber by introducing outer air into the oil chamber, even when the internal pressure in the oil chamber is reduced to a certain level or lower due to the vaporized lubricating oil being liquefied after the driving force transmission mechanism 1 stops rotating. The internal pressure in the oil chamber can be measured by means of a pressure gauge or the like placed in the oil chamber.

Thus, the driving force transmission mechanism according to this embodiment can prevent the breakage of the oil chamber in accordance with various conditions, by adjusting the set pressures of the first valve and the second valve as a check valve, taking the degree of the impact into account when replacing the work roll and the like (rise and fall of internal pressure in the oil chamber). Moreover, the driving force transmission mechanism according to the embodiment describes the case where the internal pressure in the oil chamber rises and falls due to the impact caused when the work roll and the like is replaced, but is not limited thereto. The driving force transmission mechanism according to the embodiment can maintain the internal pressure in the oil chamber at a constant value, even when the internal pressure in the oil chamber formed in the driving force transmission mechanism fluctuates due to some other factors during operation from start-up to shutdown.

The driving force transmission mechanism of the first embodiment has a simple configuration that can prevent the breakage of the oil chamber.

The inventors have confirmed that no troubles were caused by the breakage of the oil chamber due to the impact applied during the replacement of the work roll and similar operations in an actual machine provided with the check valves.

### [Second embodiment]

The driving force transmission mechanism according to the second embodiment of the invention will be described below. The driving force transmission mechanism 1 according to this embodiment has a technical feature where the driving force transmission mechanism 1 according to the embodiment described above is provided with a proximity sensor that detects the position of the first valve 10 and a control unit that suspends the driving of the driving source so that the first valve 10 is positioned above to the rotational axis X of the spindle 2.

### (Proximity sensor)

The driving force transmission mechanism according to the second embodiment is provided with a proximity sensor that detects the position of the first valve 10. The proximity sensor can detect the position of the first valve 10 without making contact with the first valve 10 to be detected. The proximity sensor may use a PX sensor, an inducible proximity sensor, a capacitance-type proximity sensor, a magnetic proximity sensor and so on. The proximity sensor detects the position of the first valve 10 at a specific time while the first valve 10 is rotated on the outer circumferences of the first gear part 4 and the second gear part 6 by driving the driving source. The position of the first valve 10 detected by the proximity sensor is transmitted as the position information to the following control unit by means of an electrical signal or the like.

### (Control unit)

The driving force transmission mechanism 1 according to the second embodiment is provided with a control unit that stops the driving of the power source so that the first valve 10 is positioned upwardly with respect to the rotational axis X of the spindle 2. The control unit controls the rotation of the driving force transmission mechanism 1 by controlling the driving of the power source based on the position information of the first valve 10 that was transmitted from the proximity sensor. The control unit recognizes the position of the first valve 10 with respect to the rotational axis X of the spindle 2 based on the position information of the first valve 10 detected by the proximity sensor. The control unit reduces the rotation speed of the driving force transmission mechanism 1 such that the first valve 10 is always positioned upward with respect to the rotational axis X of the spindle 2 at the point in time when the rotation of the driving force transmission mechanism 1 is stopped. Finally, the control unit stops and controls the driving of the driving source such that the first valve 10 is always positioned upward with respect to the rotational axis X of the spindle 2 at the point in time when the rotation of the driving force transmission mechanism 1 is stopped.

Thus, the driving force transmission mechanism 1 according to this embodiment has a first valve 10 and controls the stop position of the first valve 10 by a PX sensor or similar device to ensure that it is always positioned upward with respect to the axis of rotation X of the spindle 2 when the rotation of the driving force transmission mechanism 1 is stopped. In other words, the driving force transmission mechanism 1 of this embodiment can always position the first valve 10 upward with respect to the axis of rotation X of the spindle 2 at the point in time where the rotation of the driving force transmission mechanism 1 is stopped. This allows the lubricating oil to remain in the lower to the middle portion of the oil chamber even when the inner air in the oil chamber is expelled to the outside through the first valve 10 after pressure is applied to the inside of the oil chamber when the work roll and the like are inserted, preventing the lubricating oil from jetting out vigorously from the oil chamber due to internal pressure.

Thus, the driving force transmission mechanism 1 of the second embodiment can prevent the lubricating oil from leaking from the oil chamber with a simple configuration by controlling the rotation such that the first valve 10 is always positioned upward to the rotational axis X of the spindle 2 when the rotation of the driving force transmission mechanism 1 is stopped. That is, the driving force transmission mechanism 1 of the second embodiment can prevent the breakage of the oil chamber under various conditions, by adjusting the set pressures of the first valve 10 and the second valve 11 such as cracking pressure and the like, in consideration of the impact degree (rise and fall of the internal pressure in the oil chamber) applied when the work roll and the like are replaced.

### [Third embodiment]

The third embodiment of the invention is a method for operating the above driving force transmission mechanism. That is, the method for operating the driving force transmission mechanism according to this embodiment is a method for operating the driving force transmission mechanism according to the embodiments described above and includes a step of detecting the position of the first valve and a step of stopping the driving of the power source such that the first valve is positioned upwardly with respect to the rotational axis of the spindle. Each step in the operating method of the driving force transmission mechanism according to this embodiment will be described below.

### (Step of detecting the position of the first valve)

The method for operating the driving force transmission mechanism according to this embodiment includes a step of detecting the position of the first valve 10 provided in the driving force transmission mechanism 1. The position of the first valve 10 may be detected by a proximity sensor such as a PX sensor, inducible proximity sensor, capacitance type proximity sensor, magnetic proximity sensor or the like. The proximity sensor detects the position of the first valve 10 from when the driving force transmission mechanism 1 is rotating to when it is stopped rotating to replace the work roll R and the like. These steps can determine the position of the first valve 10 with respect to the rotational axis X of the spindle 2 from when the driving force transmission mechanism 1 is rotating to when it is stopped.

### (Step of stopping the driving of the driving source)

The method for operating the driving force transmission mechanism according to this embodiment includes a step that stops the driving of the power source such that the first valve 10 is positioned upward with respect to the rotational axis X of the spindle 2. When the work roll R connected to the driving force transmission mechanism 1 is replaced with a new work roll R', it is necessary to stop the driving of the driving source to stop the rotation of the driving force transmission mechanism 1. When the driving force transmission mechanism 1 stops, the first valve 10 is stopped in an upward position, in an opposite position or in a downward position with respect to the axis of rotation X of the spindle 2. When the first valve 10 is stopped in a downward position with respect to the rotational axis X of the spindle 2, the lubricating oil in the oil chamber passes through the first valve 10 and leaks outwards. Therefore, in the step where the drive source is stopped, the rotation is controlled such that the first valve 10 stops in an upward position with respect to the axis of rotation X of the spindle 2, thereby preventing the lubricating oil from leaking outwards.

The first valve 10 is provided to reduce the internal pressure in the oil chamber when it increases. When the first valve 10 is positioned downward with respect to the rotational axis X of the spindle 2, the internal pressure in the oil chamber may cause the lubricating oil to jet vigorously to the outside of the oil chamber, along with the inner air released from the oil chamber. The step that stops the driving of the driving source, therefore, prevents lubricating oil in the oil chamber from jetting out to the outside of the oil chamber by controlling the rotation such that the first valve 10 is always positioned upward with respect to the rotational axis X of the spindle 2. Moreover, the step that stops the driving of a rotational driving source for the spindle 2 is carried out by the control unit based on the position information of first valve 10 received from the proximity sensor. In this step, the control unit stops the driving of the driving source in consideration of the position of the first valve 10 at a specific time, the time taken until the driving force transmission mechanism 1 is stopped completely, the rotational speed and acceleration of the spindle 2 at a specific time and the like for locating the first valve 10 always upward to the rotational axis X of the spindle 2 at a time of stopping the rotation of the driving force transmission mechanism 1.

As described above, the method for operating the driving force transmission mechanism according to this embodiment involves detecting the position of the first valve 10 and stopping the driving of the driving source based on the obtained position information, such that the first valve 10 can be always stopped in an upward position with respect to the rotational axis X of the spindle 2 when the rotation of the driving force transmission mechanism 1 is stopped.

The operating method of the driving force transmission mechanism according to the third embodiment can prevent the lubricating oil in the oil chamber from leaking outwards by stopping the rotation such that the first valve 10 is always positioned upward with respect to the rotational axis of the spindle 2. The method for operating the driving force transmission mechanism in the third embodiment can also prevent the lubricating oil from jetting out of the oil chamber, when the internal pressure in the oil chamber rises, together with the inner air in the oil chamber discharged to the outside of the oil chamber through the first valve 10.

### [Other embodiments]

The present invention is described with reference to the above embodiments, but it is not limited to these embodiments. The configuration and details of the invention can be modified within the technical scope of the invention as long as the person skilled in the art can understand.

### Industrial Applicability

The driving force transmission mechanism according to the present invention prevents leakage of lubricating oil from the oil chamber even when internal pressure is applied to the boot-type seal oil chamber due to impacts such as when work rolls are replaced, and prevents deformation of the oil chamber even when the pressure in the oil chamber is reduced during work roll removal. The driving force transmission mechanism is therefore extremely useful in the production of steel products such as rolled steel material, and is industrially useful because it can contribute to the development of industries such as the steel industry, the materials industry and the environmental business.

### Reference Signs List

- 1: driving force transmission mechanism
- 2: spindle
- 3: inner cylindrical part
- 4: first gear part
- 5: outer cylindrical part
- 6: second gear part
- 7: oil chamber
- 8: boot-type seal
- 9: ventilation ring
- 10: first valve
- 11: second valve
- 12: oil supply hole
- X: rotational axis of spindle
- R, R': work roll
- O: output shaft of speed reducer

## Claims

1. A driving force transmission mechanism for transmitting power of a driving source to a work roll through a spindle,
**characterized in that**
the driving force transmission mechanism comprises
a first gear part provided on one end of the spindle;
a second gear part provided on the driving source or the work roll to fit into the first gear part; and
an oil chamber for supplying lubricating oil to the first gear part and the second gear part,
wherein the oil chamber is provided with a first valve for discharging inner air in the oil chamber out of the oil chamber and a second valve for introducing outer air into the oil chamber.

2. The driving force transmission mechanism according to claim 1, wherein the first valve is provided at a position more circumferentially outward than the first gear part and the second gear part in the radial direction of the oil chamber.

3. The driving force transmission mechanism according to claim 1 or 2, wherein the driving force transmission mechanism is provided with a proximity sensor for detecting the position of the first valve and a control unit for stopping the driving of the driving source such that the first valve is positioned upward with respect to a rotational axis of the spindle.

4. A method for operating a driving force transmission mechanism according to any one of claims 1 to 3, **characterized by** comprising a step of detecting the position of the first valve and a step of stopping the driving of the driving source so as to locate the first valve upward to the rotational axis of the spindle.
